# EUROPÄISCHE PATENTSCHRIFT

(11) **EP 1 807 287 B1**
(45) Veröffentlichungstag und Bekanntmachung des Hinweises auf die Patenterteilung: **23.04.2008**
(21) Anmeldenummer: 05805087.3
(22) Anmeldetag: 17.09.2005
(51) Int. Cl.: B60R 21/01

(54) **VORRICHTUNG ZUM AUSLÖSEN VON PASSIVEN INSASSEN-SICHERHEITSMASSNAHMEN**
DEVICE FOR TRIGGERING PASSIVE PASSENGER SAFETY MEASURES
DISPOSITIF POUR DECLENCHER DES MESURES DE SECURITE PASSIVE POUR DES OCCUPANTS

(30) Priorität: 05.11.2004 DE 102004053431
(43) Veröffentlichungstag der Anmeldung: 18.07.2007
(73) Patentinhaber: Bayerische Motoren Werke Aktiengesellschaft, 80788 München (DE)
(72) Erfinder: BAUR, Richard, 85276 Pfaffenhofen (DE); URBAHN, Jan, Ramsey, NJ 07446 (US); WATZKA, Willibald, 86551 Aichach (DE); NAGELSTRASSER, Mario, 85139 Wettstetten (DE)
(86) Internationale Anmeldenummer: PCT/EP2005/010039
(87) Internationale Veröffentlichungsnummer: WO 2006/048077

(56) Entgegenhaltungen:
- US-A- 3 861 488
- US-A- 4 995 639

## Beschreibung

Die Erfindung betrifft eine Vorrichtung zum Auslösen von passiven Insassen-Sicherheitsmaßnahmen (Maßnahmen zur passiven Sicherheit von Fahrzeuginsassen) in einem Kraftfahrzeug, aufweisend eine Steuereinheit, eine Vielzahl von Beschleunigungsaufnehmern zur Erfassung der durch einen Aufprall des Kraftfahrzeugs bedingten Beschleunigung an verschiedenen Orten des Kraftfahrzeugs sowie den Beschleunigungsaufnehmern zugeordnete Zuleitungen, über die Ausgangssignale der Beschleunigungsaufnehmer zu der Steuereinheit übertragen werden, welche wertekontinuierliche Ausgangssignale zumindest eines Teils der Beschleunigungsaufnehmer auswertet, aus den Ausgangssignalen die Art und/oder Schwere eines Aufpralls bestimmt und abhängig davon geeignete Sicherheitsmaßnahmen auslöst.

Passive Sicherheitsmaßnahmen zum Schutz der Insassen eines Kraftfahrzeugs werden auf der Grundlage von Signalen ausgelöst, welche typischerweise von im Fahrzeug verteilt angebrachten Sensoren gewonnen werden. Im Hinblick auf die rechtzeitige und für die jeweilige Situation adäquate Auslösung solcher Sicherheitsmaßnahmen kommt der geeigneten räumlichen Anbringung der Sensoren und deren Zuverlässigkeit große Bedeutung zu.

Um neben dem Auftreten eines Aufpralls auch dessen Art und Schwere beurteilen zu können, ist es vorteilhaft, den Zeitverlauf der auf verschiedene Teile des Fahrzeugs wirkenden Beschleunigung zu erfassen. Hierzu werden in passiven Insassen-Sicherheitseinrichtungen häufig Beschleunigungsaufnehmer verwendet. Diese sind typischerweise geeignet, ein zur wirkenden Beschleunigung proportionales wertekontinuierliches Signal als Ausgangssignal zu liefern. Ebenso existieren Sensoren, bei welchen ein Beschleunigungssignal bereits im Sensor integriert und somit ein Geschwindigkeits- oder Positionssignal ausgegeben wird. Auch solche Sensoren werden im Folgenden als Beschleunigungsaufnehmer bezeichnet.

Neben Beschleunigungsaufnehmem im oben genannten Sinne finden häufig Sensoren Anwendung, die ihr Ausgangssignal nur verändern, wenn die auf sie wirkende Beschleunigung, Geschwindigkeit oder Deformation eine bestimmte Schwelle überschreitet. Solche Sensoren werden im Folgenden als Binärsensoren bezeichnet. Ebenfalls als Binärsensoren bezeichnet werden im Folgenden Sensoren, die ein wertekontinuierliches Signal liefern, das von einer Steuereinheit, an welche das Signal übermittelt wird, aber lediglich schwellenbasiert zur Gewinnung eines Binärsignals ausgewertet wird.

Zur schnellen Erkennung eines Aufpralls, insbesondere eines Frontaufpralls, sind zahlreiche Vorrichtungen bekannt, in welchen so genannte Frontsensoren nahe den äußeren Fahrzeugumfängen angebracht werden. Aus der US 3,861,488 ist ein Sensor zur Erfassung einer Aufprallgeschwindigkeit bekannt, der unmittelbar auf der dem Fahrzeuginneren zugewandten Seite eines Stoßfängers angebracht ist. In der beschriebenen Sicherheitseinrichtung sind jedoch keine Mittel zur Unterscheidung zwischen einem sicherheitsrelevanten Aufprall des Fahrzeugs und nicht sicherheitsrelevanten Störeinflüssen vorgesehen. Die damit verbundene hohe Wahrscheinlichkeit von Fehlauslösungen ist bei einer passiven Sicherheitseinrichtung als schwer wiegender Nachteil zu betrachten. Zudem sind der verwendete Sensor und dessen Zuleitung in der beschriebenen Ausführungsform, welche durch einen besonders exponierten Anbringungsort gekennzeichnet ist, unzureichend gegen Umgebungseinflüsse (Witterung, Spritzwasser etc.) geschützt, was sich nachteilig auf die Haltbarkeit dieser Komponenten auswirken und zu Fehlfunktionen führen kann.

Die gemäß dem Stand der Technik häufigste Anbringungsart von Frontsensoren ist die Anbringung an einem Karosserieteil nahe den durch die Stoßfänger des Fahrzeugs definierten äußeren Fahrzeugumfängen. Beispielsweise ist aus der gattungsgemäßen US 4,995,639 eine passive Sicherheitseinrichtung bekannt, in welcher ein Frontsensor an einem vorderen Querträger des Fahrzeugs angebracht ist. Nachteilig im Hinblick auf die Mess- und Auswertbarkeit der Sensorsignale wirkt sich bei einer solchen Anbringungsart aus, dass auf den Beschleunigungsaufnehmer aufgrund der im Vergleich zu den Stoßfängern hohen Steifigkeit der Karosserie im Falle eines Aufpralles innerhalb eines verhältnismäßig geringen Zeitraums sehr hohe Beschleunigungsspitzen wirken. Ebenfalls verstärkt durch die hohe Steifigkeit der Karosserie können mechanische Resonanzschwingungen auftreten, die das zu messende Beschleunigungssignal überlagern und dessen Auswertung erschweren. Zudem besteht bei einer von den äußeren Fahrzeugumfängen zum Fahrzeuginneren versetzten Anbringung, Fig. 1 der US 4,995,639 stellt nicht alle relevanten Fahrzeugteile dar, eines Beschleunigungsaufnehmers nur eine indirekte mechanische Kopplung zwischen der Aufprallstelle und der Anbringungsstelle des Beschleunigungsaufnehmers. Die mechanische Übertragung der Aufprallenergie über diese indirekte mechanische Kopplung bewirkt eine Verfälschung der vom Beschleunigungsaufnehmer gemessenen Beschleunigung gegenüber der an den äußeren Fahrzeugumfängen wirksamen Beschleunigung. Ein Aufprall kann dadurch erst sehr spät detektiert und nur ungenau bezüglich Art und Schwere beurteilt werden. Dies gilt insbesondere bei einem Aufprall von geringer oder mittlerer Schwere. Ein schwererer Aufprall kann angestellten Untersuchungen zufolge besser durch an anderen Messorten angebrachte Sensoren detektiert werden.

Unter einem Aufprall geringer oder mittlerer Schwere ist im Folgenden ein Aufprall mit einer Aufprallrelativgeschwindigkeit von bis zu 40 km/h gegen ein weiches Objekt oder mit einer Aufprallrelativgeschwindigkeit von bis zu 30 km/h gegen ein hartes Objekt zu verstehen.

Eine passive Sicherheitseinrichtung mit unmittelbar an den vorderen Stoßfängern angebrachten Frontsensoren ist aus der DE 101 42 925 C1 bekannt. Die Frontsensoren sind dabei jedoch als Binärsensoren ausgeführt, welche lediglich der frühzeitigen Detektion eines Aufpralls dienen. Die Beurteilung von Art und Schwere eines Aufpralls erfolgt auf der Basis weiter im fahrzeuginneren angebrachter Beschleunigungsaufnehmer. Die Nachteile hinsichtlich der Detektion und Beurteilung eines Aufpralls geringer oder mittlerer Schwere, welche mit der aus der Anbringung im Fahrzeuginneren resultierenden indirekten mechanischen Kopplung zwischen der Aufprallstelle und dem Sensoranbringungsort einhergehen, wurden bereits an früherer Stelle erläutert.

Aufgabe der Erfindung ist es, eine mit geringem Risiko von Fehlfunktionen behaftete Vorrichtung der eingangs genannten Art zu schaffen, welche eine frühzeitige Aufpralldetektion und eine genaue Beurteilung der Art und/oder Schwere eines Auf pralls erlaubt. Insbesondere ist eine frühzeitige Detektion und eine genaue Beurteilung für einen Aufprall geringer oder mittlerer Schwere zu leisten.

Gelöst wird diese Aufgabe durch eine passive Sicherheitseinrichtung, in welcher die zur Signalaufnahme vorgesehenen Beschleunigungsaufnehmer so an Fahrzeugteilen mit geringer Struktursteifigkeit an den äußeren Fahrzeugumfängen angebracht werden und in welcher alle Fahrzeugteile hinsichtlich Form, Anordnung und Material so ausgeführt sind, dass die Beschleunigungsaufnehmer nach einem Aufprall des Kraftfahrzeugs von geringer oder mittlerer Schwere innerhalb eines Mindestwirkzeitraums nicht in Berührung mit Fahrzeugteilen mit hoher Struktursteifigkeit kommen.

Im Falle eines Aufpralls des Fahrzeugs auf ein Objekt wirken die größten Beschleunigungswerte auf diejenigen Fahrzeugteile, die sich am nächsten zur Aufprallstelle an den äußeren Fahrzeugumfängen befinden. Ebenfalls wird für solche Fahrzeugteile zu einem sehr frühen Zeitpunkt das betragsmäßige Maximum des Zeitverlaufs der auf einen Aufprall folgenden Beschleunigung erreicht. Dies gilt insbesondere, wenn die besagten Fahrzeugteile eine geringe Struktursteifigkeit besitzen, also mit starker Deformation und somit großen Beschleunigungswerten auf den Aufprall reagieren. Wird ein Beschleunigungsaufnehmer an einem solchen Fahrzeugteil angebracht, hat ein Aufprall nahe der Anbringungsstelle des Beschleunigungsaufnehmers eine sehr frühzeitige und starke Veränderung des Ausgangssignals des Beschleunigungsaufnehmers zur Folge.

Aus der direkten mechanischen Kopplung zwischen einem aufprallendem Objekt und einem Fahrzeugteil an den äußeren Fahrzeugumfängen nahe der Aufprallstelle resultiert eine direkte mechanische Kopplung zwischen dem aufprallenden Objekt und einem an dem Fahrzeugteil angebrachten Beschleunigungsaufnehmer. Die an der Aufprallstelle wirkende Beschleunigung wirkt somit unverfälscht, bzw. weniger verfälscht als bei Anbringung des Beschleunigungssensors an einer anderen Stelle des Fahrzeugs, auf den Beschleunigungssensor. Die mit einem erfindungsgemäß angebrachten Beschleunigungsaufnehmer aufnehmbaren Beschleunigungszeitverläufe eignen sich hinsichtlich Signalqualität und Wertebereich typischerweise für eine wertekontinuierliche Auswertung.

Die durch eine erfindungsgemäße Vorrichtung erfolgende frühzeitige Bereitstellung mechanisch unverfälschter, wertekontinuierlich auswertbarer Beschleunigungszeitverläufe ermöglicht bei entsprechender Signalweiterleitung und -auswertung eine genaue und zuverlässige Beurteilung der Art und der Schwere eines Aufpralls und begünstigt so das Auslösen adäquater passiver Sicherheitsmaßnahmen. Die Sicherheit der Fahrzeuginsassen wird dadurch deutlich verbessert.

Ein Vorteil der erfindungsgemäßen Anbringung eines Beschleunigungsaufnehmers an einem Fahrzeugteil mit geringer Struktursteifigkeit besteht darin, dass dadurch gegenüber der Anbringung an einem Karosserieteil die Wirkung von nicht sicherheitsrelevanten Vibrationen auf den Beschleunigungsaufnehmer reduziert wird.

Ein weiterer wesentlicher Vorteil einer erfindungsgemäßen Vorrichtung liegt darin, dass die bei einem Aufprall auf den Beschleunigungsaufnehmer wirkende Beschleunigung gegenüber dem Fall der Anbringung an einem Karosserieteil über einen längeren Zeitraum andauert. Durch die längere Wirkzeit kann ein besser auswertbares, etwa in einer Steuereinheit zum Vergleich mit dort in einer Datenbasis abgelegten Mustern heranziehbares, Zeitverlaufssignal gewonnen werden. Wünschenswert ist dabei eine, im Folgenden als Mindestwirkzeit bezeichnete, minimale Länge des Wirkzeitraums von beispielsweise etwa 40 ms. Die genaue Mindestwirkzeit hängt ab von dem jeweils verwendeten Verfahren zur Beurteilung des Aufpralls.

Eine Mindestwirkzeit kann jedoch nur garantiert werden, wenn der Beschleunigungsaufnehmer auch im Falle einer aus einem Aufprall resultierenden Deformation des Fahrzeugs nicht innerhalb des Mindestwirkzeitraums zerstört wird oder aus anderen Gründen ausfällt. Als Mindestwirkzeitraum wird der Zeitraum mit der Länge der Mindestwirkzeit bezeichnet, welcher im Moment des Aufpralls zwischen Fahrzeug und Objekt beginnt.

Um die Zerstörung der Beschleunigungsaufnehmer innerhalb des Mindestwirkzeitraums zu verhindern, sind in einer erfindungsgemäßen Vorrichtung die Beschleunigungsaufnehmer so angebracht und sind alle Fahrzeugteile hinsichtlich Form, Anordnung und Material so ausgeführt, dass die enthaltenen Beschleunigungsaufnehmer nach einem Aufprall innerhalb des Mindestwirkzeitraums nicht mit Fahrzeugteilen hoher Struktursteifigkeit in Berührung kommen.

Gemäß einer Weiterbildung der Erfindung wird hierzu auf der zum Fahrzeuginneren gewandten Seite des Beschleunigungsaufnehmers ein Deformationsraum vorgesehen, welcher entweder hohl oder ausschließlich von Fahrzeugteilen mit geringer Struktursteifigkeit gefüllt ist. Zum Fahrzeugäußeren hin wird der Deformationsraum vorzugsweise begrenzt durch eine durch den Beschleunigungsaufnehmer verlaufende Ebene, deren Normale vom Beschleunigungsaufnehmer zum Fahrzeuginneren weist. Die Form des Deformationsraums zum Fahrzeuginneren hin wird definiert durch die Form und Anordnung der benachbarten Fahrzeugteile. Deformationen dieser Fahrzeugteile können den Deformationsraum verändern.

Anstelle einer Ebene durch den Beschleunigungsaufnehmer kann als restriktivere Begrenzung des Deformationsraums zum Fahrzeugäußeren hin auch eine, beispielsweise kegelförmig von dem Beschleunigungsaufnehmer ausgehende, Hyperebene definiert werden. Auf diese Weise lassen sich mögliche deformationsbedingte Bewegungsrichtungen des Beschleunigungsaufnehmers berücksichtigen. Die Ebene bzw. Hyperebene wird erfindungsgemäß so gewählt, dass der Beschleunigungsaufnehmer sich stets, insbesondere im Falle eines Aufpralls, vollständig auf der Fahrzeuginnenseite der Ebene bzw. Hyperebene befindet.

Sofern ein solcher Deformationsraum auf der zum Fahrzeuginneren gewandten Seite einer zur erfindungsgemäßen Anbringung eines Beschleunigungsaufnehmer prinzipiell geeigneten Stelle an einem Fahrzeugteil bereits vorhanden ist, kann ein Beschleunigungsaufnehmer an dieser Stelle angebracht werden.

Je nach Betrachtungsweise befindet sich der Beschleunigungsaufnehmer selbst innerhalb oder am zum Fahrzeugäußeren weisenden Rand des ihm zugeordneten Deformationsraums. Im Falle eines Aufpralls wird der Beschleunigungsaufnehmer durch die Deformation des Kraftfahrzeugteils, an welchem er befestigt ist, weiter ins Innere des Deformationsraums verschoben. Durch die Tatsache, dass sich in dem Deformationsraum keine Fahrzeugteile mit hoher Struktursteifigkeit befinden, ist gewährleistet, dass der Beschleunigungsaufnehmer nicht durch den Kontakt mit einem Fahrzeugteil mit hoher Struktursteifigkeit zerstört wird, solange er sich vollständig im Inneren des Deformationsraums befindet.

Die Abmessungen des vorzusehenden Deformationsraums, insbesondere dessen Tiefe zum Fahrzeuginneren hin, werden festgelegt anhand des Bereichs der durch den Beschleunigungsaufnehmer zu detektierenden Aufprallgeschwindigkeiten, der Mindestwirkzeit und der Struktursteifigkeit des Fahrzeugteils, an welchem der Beschleunigungsaufnehmer angebracht ist. Sofern hierzu Information zur Verfügung steht, können auch Masse, Form, Steifigkeit, Geschwindigkeit und weitere physikalische Größen aufprallender Objekte bei der Abschätzung berücksichtigt werden. Prinzipiell kann die Dimensionierung des Deformationsraums auf der Basis von Grenzwertabschätzungen und/oder Berechnungen und/oder Simulationen (z. B. FEM) erfolgen.

Die Berücksichtigung des Deformationsraums kann aufgrund fortgeschrittener Entwicklungs- und Fertigungsmethoden bereits im frühen Entwicklungsprozess eines Fahrzeuges erfolgen und lässt sich im Fertigungsprozess in der Regel mit geringstmöglicher Steigerung des Fertigungsaufwands umsetzen. Ob eine bestimmte Dimensionierung eine gewünschte Mindestwirkzeit im Falle eines Aufpralls vorgegebener Art und Schwere garantiert oder mit hoher Wahrscheinlichkeit erwarten lässt, kann im Entwicklungsprozess beispielsweise durch Simulationen an Datenmodellen, insbesondere so genannten virtuellen Prototypen, verifiziert werden.

Neben der Vermeidung der mechanischen Zerstörung der Beschleunigungsaufnehmer selbst hängt die Verfügbarkeit geeigneter Ausgangssignale der Beschleunigungsaufnehmer für die Auswertung in der Steuereinheit auch davon ab, ob die mechanische Zerstörung der Zuleitungen der Beschleunigungsaufnehmer im Falle eines Aufpralls verhindert werden kann.

Der Einfachheit halber wird im Folgenden davon ausgegangen, dass jeder Beschleunigungsaufnehmer eine einzige Zuleitung besitzt, die ihn direkt mit der Steuereinheit verbindet. Die angestellten Überlegungen sind jedoch ohne Weiteres auf die indirekte Anbindung der Beschleunigungsaufnehmer an die Steuereinheit über andere Komponenten eines Datenbus-Systems und/oder eine Vernetzung der Beschleunigungsaufnehmer untereinander übertragbar. Solche, Ausführungsformen liegen somit ebenfalls im Bereich der Erfindung. Ebenso können durch die Steuereinheit, welche aus einer oder mehreren Komponenten bestehen kann, weitere Sensoren, zum gleichen oder einem anderen Zweck, ausgewertet werden Abhängig vom Sensortyp des Beschleunigungsaufnehmers versorgt die Zuleitung den Beschleunigungsaufnehmer gegebenenfalls mit einer zu dessen Betrieb erforderlichen Versorgungs-, Offset oder Referenzgröße.

Gemäß einer zweiten Weiterbildung der Erfindung ist die Zuleitung des mindestens einen Beschleunigungsaufnehmers elastisch; insbesondere biegeelastisch, ausgeführt und verläuft innerhalb eines durch Form, Anordnung und ggf. Deformation der benachbarten Fahrzeugteile definierten Zuleitungskanals. Die mechanische Zerstörung der. Zuleitung kann dann mit hoher Wahrscheinlichkeit ausgeschlossen wer den, wenn dieser Zuleitungskanal im Falle eines Aufpralls an keiner Stelle durch die Deformation von Fahrzeugteilen unterbrochen wird und wenn die Länge des Zuleitungskanals sich nicht deformationsbedingt so verändert, dass die Länge der Zuleitung nicht mehr ausreicht, um sich durch den gesamten Zuleitungskanal zu erstrecken. Gemäß der genannten zweiten Weiterbildung der Erfindung sind Form, Anordnung und Material aller Fahrzeugteile daher so ausgeführt, dass der geringste Durchmesser des Zuleitungskanals nach einem Aufprall des Kraftfahrzeugs von geringer oder mittlerer Schwere innerhalb eines Mindestwirkzeitraums größer bleibt als der Durchmesser der Zuleitung.

Der Querschnitt der Zuleitung wird hier zunächst als über die Länge der Zuleitung hinweg im Wesentlichen konstant und kreisförmig vorausgesetzt. Bei einer Zuleitung mit nicht konstantem und/oder nicht kreisförmigem Querschnitt muss eine entsprechend aufwändigere Betrachtung des verbleibenden Zuleitungskanals angestellt werden. Eine solche Betrachtung und die daraus abgeleitete Ausführung der den Zuleitungskanal bildenden Fahrzeugteile liegt ebenfalls im Bereich der Erfindung.

Außerdem sind gemäß der genannten zweiten Weiterbildung der Erfindung die Länge der Zuleitung, ggf. unter Berücksichtigung einer Dehnungselastizität, sowie die Anordnung und Befestigung der Zuleitung an den Fahrzeugteilen so ausgeführt, dass die Zuleitung sich einer Vielzahl möglicher durch die Deformation von Fahrzeugteilen bedingten Bewegungen des Beschleunigungsaufnehmers und Veränderungen des Zuleitungskanals, insbesondere sämtlichen aus einem Aufprall des Kraftfahrzeugs von geringer oder mittlerer Schwere innerhalb eines Mindestwirkzeitraums resultierenden Bewegungen des Beschleunigungsaufnehmers und Veränderungen des Zuleitungskanals, anpassen kann, ohne abzureißen oder beschädigt zu werden.

Ähnlich wie beim oben genannten Deformationsraum werden die Abmessungen und die genaue Form des vorzusehenden Zuleitungskanals festgelegt anhand des Bereichs der durch den Beschleunigungsaufnehmer zu detektierenden Aufprallgeschwindigkeiten, anhand der Mindestwirkzeit, anhand der Struktursteifigkeiten der den Zuleitungskanal bildenden Fahrzeugteile sowie anhand der Beschaffenheit der zwischen dem Zuleitungskanal und einer potenziellen Aufprallstelle am Fahrzeug liegenden Fahrzeugteile. Sofern hierzu Information zur Verfügung steht, können wie bei der Dimensionierung des Deformationsraums auch Masse, Form, Steifigkeit, Geschwindigkeit und weitere physikalische Größen aufprallender Objekte bei der Abschätzung berücksichtigt werden. Prinzipiell kann die Dimensionierung des Zuleitungskanals auf der Basis von Grenzwertabschätzungen und/oder Berechnungen und/oder Simulationen (z B. FEM) erfolgen.

Erkauft werden die oben genannten Vorteile einer erfindungsgemäßen Vorrichtung wegen der dabei implizierten exponierten Anbringung an den äußeren Fahrzeugumfängen durch die Notwendigkeit zur robusten Ausführung der Beschleunigungsaufnehmer und ihrer Zuleitungen gegen Umwelteinflüsse, insbesondere Feuchtigkeit.

Im Gegensatz zu den meisten gemäß dem Stand der Technik Anwendung findenden Beschleunigungsaufnehmem ist das Gehäuse eines in einer erfindungsgemäßen Vorrichtung verwendeten Beschleunigungsaufnehmers feuchtigkeitsresistent ausgeführt. Ebenso ist die Verbindungsstelle zwischen dem Gehäuse und der Zuleitung des Beschleunigungsaufnehmers feuchtigkeitsresistent ausgeführt.

Besonders vorteilhaft ist hier die Verwendung von hydrolytisch stabilisiertem Material für das Gehäuse eines in einer erfindungsgemäßen Vorrichtung verwendeten Beschleunigungsaufnehmers.

Eine besonders hohe Feuchtigkeitsresistenz kann erreicht werden, wenn das Gehäuse des Beschleunigungsaufnehmers alternativ oder zusätzlich laserverschweißt ist, insbesondere wenn es einen laserverschweißten Deckel besitzt.

Am Gehäuse eines in einer weiteren besonders vorteilhaften Ausführungsform einer erfindungsgemäßen Vorrichtung verwendeten Beschleunigungsaufnehmers sind Mittel für einen Druckausgleich vorgesehen. Durch einen solchen Druckausgleich kann verhindert werden, dass Feuchtigkeit aufgrund eines Unterdrucks im Gehäuseinneren ins Gehäuseinnere gesogen wird.

Neben Feuchtigkeitsresistenz ist bei der Ausführung der Beschleunigungsaufnehmer und Zuleitungen wegen deren exponierter Anbringung im Fahrzeug auf hohe Robustheit gegen mechanische Beschädigung zu achten (Bersten des Sensorgehäuses, Abreißen oder Brechen der Zuleitung). Durch fortgeschrittene Techniken in der Herstellung von Beschleunigungsaufnehmern und Zuleitungen kann die Erfüllung der genannten Anforderungen jedoch gewährleistet werden.

Die erfindungsgemäß verwendeten feuchtigkeitsresistenten Gehäuse für Beschleunigungsaufnehmer besitzen eine hohe Elastizität. Bei einem, idealerweise zu vermeidendem, deformationsbedingten Kontakt mit Fahrzeugteilen und/oder bei einer Deformation des Fahrzeugteils, auf welchem der Beschleunigungssensor angebracht ist, sind elastische Materialien weniger zerstörungsanfällig als die in Vorrichtungen gemäß dem Stand der Technik verwendeten Materialien. Gemäß dem Stand der Technik sind Beschleunigungsaufnehmer beispielsweise meist in Metallgehäusen mit verklebtem Deckel untergebracht. Auch Vibrationen des Fahrzeugteils, auf welchem der Beschleunigungssensor angebracht ist, verursachen bei Verwendung von elastischen Gehäusen der Beschleunigungsaufnehmer geringere Störsignale als bei Verwendung von steiferen Gehäusen, beispielsweise Metallgehäusen.

Die mechanische Absicherung der Zuleitungen erfolgt, neben der Verwendung von biege- und idealerweise auch dehnungselastischen Materialien für die Zuleitungen, überwiegend bereits im frühen Entwicklungsprozess eines Fahrzeuges.

In der bisherigen Betrachtung wurde vorausgesetzt, dass die auf einen an den äußeren Fahrzeugumfängen angebrachten Beschleunigungsaufnehmer wirkende Beschleunigung weitgehend mit der Beschleunigung der umliegenden Fahrzeugteile übereinstimmt und die Ausgangssignale des Beschleunigungsaufnehmers somit eine gute Repräsentation der auf die entsprechenden Fahrzeugteile wirkenden Beschleunigung geben.

Im Falle der Verwendung von Beschleunigungsaufnehmern mit bevorzugter Wirkrichtung kann eine auf dieser Voraussetzung beruhende Beurteilung von Art und Schwere eines Aufpralls allerdings nur dann zuverlässig erfolgen, wenn die Beschleunigungsaufnehmer so an den äußeren Fahrzeugumfängen angebracht sind, dass sie im Falle eines Aufpralls nicht aus ihrer bevorzugten Wirkrichtung verdreht werden. Für eine optimale Signalaufnahme mit Beschleunigungsaufnehmern ist somit darauf zu achten, dass die durch einen Aufprall verursachte auf den Beschleunigungsaufnehmer wirkende Beschleunigung einen hohen translatorischen und einen möglichst geringen rotatorischen Anteil besitzt.

Um eine überwiegend translatorische Beschleunigung im Falle eines Aufpralls zu gewährleisten, ist es besonders vorteilhaft, wenn der Querschnitt des Beschleunigungsaufnehmers in Richtung des Fahrzeuginneren im Wesentlichen mit dem Querschnitt eines Stützelements an dem den Beschleunigungsaufnehmer tragenden Fahrzeugteil überlappt. Ist eine Überlappung aus konstruktiven Gründen nicht möglich, ist eine möglichst geringe Entfernung (z. B. weniger als 10 cm) wünschenswert.

Gemäß einer bevorzugten Ausführungsform der Erfindung ist ein in einer erfindungsgemäßen Vorrichtung verwendeter Beschleunigungsaufnehmer deshalb so positioniert, dass der Querschnitt des Beschleunigungsaufnehmers in Richtung des Fahrzeuginneren eine geringe Entfernung vom Querschnitt eines Stützelements, z. B. eines Pralldämpfers, besitzt.

Wenn die konstruktiven Randbedingungen dies erlauben, wird ein Beschleunigungsaufnehmer gemäß einer besonders bevorzugten Ausführungsform der Erfindung so positioniert, dass sein Querschnitt in Richtung des Fahrzeuginneren im Wesentlichen mit dem Querschnitt eines Stützelements überlappt.

Werden andererseits Beschleunigungsaufnehmer verwendet, welche in der Lage sind, Beschleunigungen in mehreren Richtungen und/oder eine Verdrehung, insbesondere um die eigene Hochachse, messtechnisch zu erfassen, so muss eine Verdrehung eines Beschleunigungsaufnehmers nicht zwingend durch konstruktive Maßnahmen vermieden werden, sondern kann bei der Auswertung seiner Ausgangssignale rechnerisch berücksichtigt werden.

Die Ausgangssignale der Beschleunigungsaufnehmer werden über die Zuleitungen an eine Steuereinheit weitergeleitet. Die Steuereinheit ist geeignet, beispielsweise anhand des Vergleichs der aufgenommenen wertekontinuierlichen Beschleunigungssignale mit abgespeicherten Referenzdaten, Art und Schwere eines Aufpralls zu bestimmen. Insbesondere ist die Steuereinheit einer vorteilhaften erfindungsgemäßen Vorrichtung geeignet, anhand der Ausgangssignale der Beschleunigungsaufnehmer zwischen einem Aufprall des Fahrzeugs und nicht sicherheitsrelevanten Störeinflüssen zu unterscheiden.

Abhängig von der Art und Schwere eines Aufpralls löst die Steuereinheit geeignete Sicherheitsmaßnahmen aus. Das Auslösen geeigneter Sicherheitsmaßnahmen kann auch das Auslösen von vorbereitenden Maßnahmen umfassen, die eine oder mehrere erst später ausgelöste Sicherheitsmaßnahmen in verbesserter, z. B. schnellerer, Art und Weise ablaufen lassen.

Anhand der beigefügten Zeichnungen wird die Erfindung im folgenden weiter erläutert. Dabei zeigen
- Fig. 1: schematisch die Anbringung eines Beschleunigungsaufnehmers als Frontsensor in einer passiven Insassen-Sicherheitseinrichtung für ein Kraftfahrzeug gemäß einer Ausführungsform der vorliegenden Erfindung,
- Fig. 2: einen Vergleich zwischen den qualitativen Zeitverläufen der Negativ-Beschleunigung, die während eines Frontaufpralls eines Kraftfahrzeugs (a) auf einen erfindungsgemäß als Frontsensor angeordneten Beschleunigungsaufnehmer bzw. (b) auf einen nach dem Stand der Technik als Frontsensor angeordneten Beschleunigungsaufnehmer wirkt, und
- Fig. 3: schematisch die Kommunikationsstruktur einer erfindungsgemäßen passiven Insassen-Sicherheitseinrichtung für ein Kraftfahrzeug.

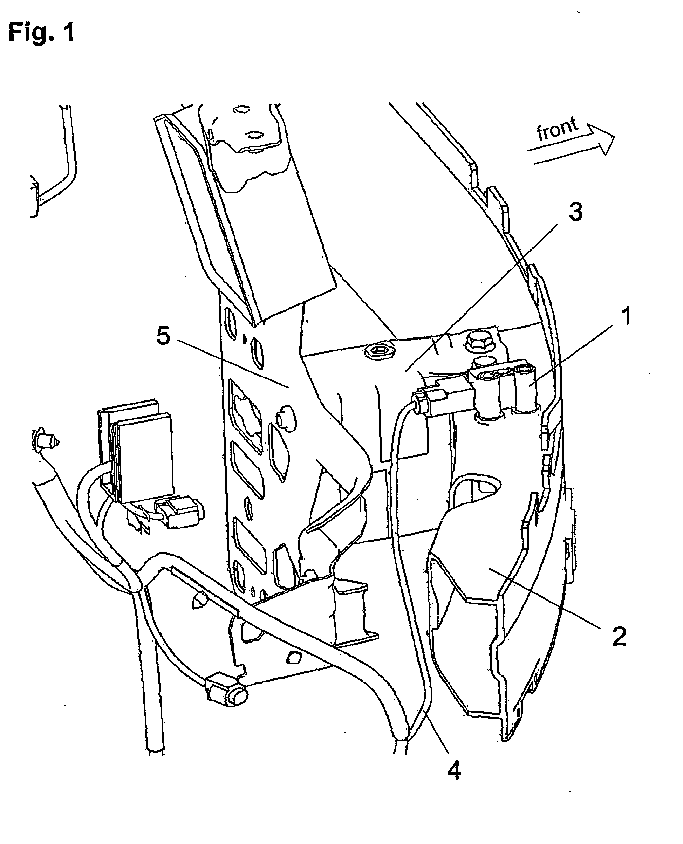

Fig. 1 zeigt schematisch die Anbringung eines Beschleunigungsaufnehmers als Frontsensor in einer passiven Insassen-Sicherheitseinrichtung für ein Kraftfahrzeug gemäß einer Ausführungsform der vorliegenden Erfindung. Der als Frontsensor fungierende Beschleunigungsaufnehmer 1 ist in diesem Fall direkt an der Stoßstange 2 fixiert. Auf diese Weise befindet sich der Beschleunigungsaufnehmer in unmittelbarer Nähe der äußeren Fahrzeugumfänge.

Die erfindungsgemäße Vorrichtung dient insbesondere der Detektion und Unterscheidung von Aufprallen geringer oder mittlerer Schwere (so genannten "Low-Speed"-Crashes mit Aufprallrelativgeschwindigkeiten bis 40 km/h gegen ein weiches Objekt oder mit Aufprallrelativgeschwindigkeiten bis 30 km/h gegen ein hartes Objekt). Die dabei gemessenen Beschleunigungssignale liegen meist im Wertebereich unterhalb der 50-fachen Erdbeschleunigung. Untersuchungen haben gezeigt, dass "High Speed"-Crashes an anderen Messorten, z. B, im Fahrzeug-Zentrum früher und sicherer erkannt werden können.

Eine erfindungsgemäße Vorrichtung kann vollständig separat von einer Vorrichtung zur Detektion und Unterscheidung von "High Speed"-Crashes vorgesehen werden oder bestimmte Komponenten gemeinsam mit einer solchen Vorrichtung nutzen.

Durch die geringe Struktursteifigkeit der Stoßstange 2 ist der Beschleunigungsaufnehmer 1 geringeren Vibrationen ausgesetzt als etwa im Fall einer Anbringung an einem sich durch höhere Struktursteifigkeit auszeichnenden Karosserieteil 5.

Am dargestellten Anbringungsort ist der Beschleunigungsaufnehmer 1 durch die äußere Fahrzeughülle weitgehend vor äußeren Umwelteinflüssen (z. B. direkte Stöße, Witterung, Spritzwasser, ...) geschützt. Zusätzliche Robustheit verleiht dem Beschleunigungsaufnehmer 1 ein feuchtigkeitsresistent und elastisch ausgeführtes Gehäuse aus hydrolytisch stabilisiertem Material mit laserverschweißtem Deckel.

Auf der zum Fahrzeuginneren gewandten Seite des Beschleunigungsaufnehmers 1 ist ein Deformationsraum ausgebildet. Zum Fahrzeugäußeren hin wird der Deformationsraum begrenzt durch eine kegelförmige Hyperebene, die einen Öffnungswinkel von +/- 15 Grad um einen durch den in seiner Ausgangsposition befindlichen Beschleunigungsaufnehmer zum Fahrzeuginneren weisenden Raumvektor aufspannt. Die Hyperebene ist so gewählt, dass sich der Beschleunigungsaufnehmer 1 vor, während und nach einer durch einen Aufprall bedingten Deformation mit hoher Wahrscheinlichkeit vollständig auf der zum Fahrzeuginneren weisenden Seite der Hyperebene befindet. Zum Fahrzeuginneren hin ist der Deformationsraum im Wesentlichen durch das Karosserieteil 5 begrenzt. Weitere hier nicht abgebildete Fahrzeugteile begrenzen den Deformationsraum gegebenenfalls weiter, beispielsweise nach oben hin.

Aus dem gegenüber dem Stand der Technik, in welchem ein solcher Deformationsraum nicht gezielt vorgesehen wurde, vergrößerten Volumen des Deformationsraums, insbesondere dessen Tiefe, also im Wesentlichen aus dem Abstand zwischen dem Anbringungsort des Beschleunigungsaufnehmers 1 und dem nächsten dahinter liegenden Karosserieteil 5, resultiert im Falle eines Aufpralls ein entsprechend verlängerter Zeitraum zwischen der ersten messbaren Beschleunigung des Frontsensors und dessen Kontakt mit der Karosserie, durch welchen der Beschleunigungsaufnehmer 1 potenziell mechanisch beschädigt wird. Der Wirkzeitraum des Beschleunigungsaufnehmers 1 wird somit gegenüber dem Stand der Technik verlängert.

Im in Fig. 1 abgebildeten Ausführungsbeispiel ist der Deformationsraum hohl. Alternativ kann ein Deformationsraum erfindungsgemäß Fahrzeugteile enthalten, welche sämtlich eine so geringe Struktursteifigkeit besitzen, dass der durch diesen Deformationsraum abgesicherte Beschleunigungsaufnehmer 1 durch diese Fahrzeugteile in Folge einer auf einen Aufprall folgenden Deformation der umliegenden Fahrzeugteile nicht beschädigt wird.

Der Deformationsraum bzw. die diesen Deformationsraum definierenden Fahrzeugteile sind im vorliegenden Fall so ausgeführt, dass der Beschleunigungsaufnehmer 1 nach einem Aufprall des Kraftfahrzeugs von geringer oder mittlerer Schwere innerhalb eines Mindestwirkzeitraums von 40 ms nicht in Berührung mit einem Fahrzeugteil hoher Struktursteifigkeit, insbesondere dem Karosserieteil 5, kommt. Der Beschleunigungsaufnehmer 1 wird somit innerhalb des Mindestwirkzeitraums von 40 ms nicht zerstört und bleibt voll funktionsfähig.

Als Wirkzeitraum eines Beschleunigungsaufnehmers wird der Zeitraum definiert zwischen einem zu detektierenden Aufprall und dem Ausfall oder der Zerstörung des Beschleunigungsaufnehmers. Der Wirkzeitraum kann bereits in einer frühen Entwicklungsphase anhand von Datenmodellen, so genannten virtuellen Prototypen, durch FEM-Simulationen für verschiedene Anbringungsorte eines Beschleunigungsaufnehmers, für verschiedene Aufprallsituationen und verschiedene Ausführungsformen des Deformationsraums bestimmt und mit dem gewünschten Mindestwirkzeitraum von 40 ms verglichen werden.

Im Fahrzeug befindet sich eine Vielzahl von Beschleunigungsaufnehmern zur Erfassung der durch einen Aufprall des Kraftfahrzeugs bedingten Beschleunigung an verschiedenen Orten des Kraftfahrzeugs. Mindestens einer von diesen Beschleunigungsaufnehmern ist gemäß den obigen Ausführungen angeordnet und abgesichert. Die Beschleunigungsaufnehmer sind über den Beschleunigungsaufnehmern zugeordnete Zuleitungen mit einer Steuereinheit verbunden. Über die Zuleitungen werden die Ausgangssignale der Beschleunigungsaufnehmer zu der Steuereinheit übertragen. Die Steuereinheit wertet wertekontinuierliche Ausgangssignale zumindest eines Teils der Beschleunigungsaufnehmer aus, bestimmt aus den Ausgangssignalen die Art und/oder Schwere eines Aufpralls und löst abhängig davon geeignete Sicherheitsmaßnahmen aus.

Der Querschnitt des Beschleunigungsaufnehmers 1 in Richtung des fahrzeuginneren ist im Beispiel gemäß Fig. 1 nur wenige Zentimeter vom Querschnitt des Pralldämpfers 3 entfernt. Der Beschleunigungsaufnehmer 1 wird im Falle eines Aufpralls und einer Deformation der Stoßstange 2 kaum aus seiner zum Fahrzeuginneren weisenden Wirkrichtung verdreht.

Gemäß besonders vorteilhafter Ausführungsformen der Erfindung, welche hier nicht eigens abgebildet sind, ist der Beschleunigungsaufnehmer 1 so positioniert, dass der Querschnitt des Beschleunigungsaufnehmers 1 in Richtung des Fahrzeuginneren ganz oder teilweise mit dem Querschnitt des Pralldämpfers 3 überlappt.

Da durch die beschriebenen konstruktiven Maßnahmen gewährleistet werden kann, dass der Beschleunigungsaufnehmer 1 im Falle eines Aufpralls nicht wesentlich aus seiner zum Fahrzeuginneren gerichteten Wirkrichtung verdreht wird, kann im vorliegenden Ausführungsbeispiel ein Beschleunigungsaufnehmer mit einer einzigen bevorzugten Wirkrichtung verwendet werden.

In alternativen hier nicht gesondert abgebildeten Ausführungsformen der Erfindung werden Beschleunigungsaufnehmer verwendet, welche geeignet sind, Beschleunigungen in mehreren Richtungen und/oder eine Verdrehung, insbesondere um die eigene Hochachse, messtechnisch zu erfassen. Bei Verwendung solcher Beschleunigungsaufnehmer kann eine Verdrehung derselben bei der Auswertung der Ausgangssignale rechnerisch berücksichtigt werden.

Die erfindungsgemäße exponierte Anbringung der als Frontsensoren fungierenden Beschleunigungsaufnehmer erfordert neben der bereits behandelten mechanischen Absicherung der Beschleunigungsaufnehmer selbst auch eine gesonderte mechanische Absicherung der Zuleitungen der Frontsensoren.

Hierzu werden die Zuleitungen der Beschleunigungsaufnehmer zum einen elastisch, insbesondere biegeelastisch, ausgeführt. Zum anderen wird, um die Zuleitung 4 eines Beschleunigungsaufnehmers 1 aus Fig. 1 innerhalb des Mindestwirkzeitraums nach einem Aufprall gegen mechanische Beschädigung zu schützen, ein Zuleitungskanal vorgesehen, durch welchen sich die Zuleitung 4 erstreckt.

Der Zuleitungskanal ist begrenzt durch die umliegenden Fahrzeugteile, seine Geometrie ist somit definiert durch die Form und Anordnung dieser Fahrzeugteile. Eine Deformation der Fahrzeugteile verändert somit auch die Geometrie des Zuleitungskanals. Im Beispiel gemäß Fig. 1 sind Form, Anordnung und Material aller Fahrzeugteile so ausgeführt, dass der geringste Durchmesser des Zuleitungskanals nach einem Aufprall des Kraftfahrzeugs von geringer oder mittlerer Schwere innerhalb des Mindestwirkzeitraums größer bleibt als der Durchmesser der Zuleitung, welche hier einen kreisförmigen Querschnitt besitzt. Die Länge der Zuleitung, ggf. unter Berücksichtigung einer Dehnungselastizität der Zuleitung, sowie die Anordnung und die Befestigung der Zuleitung an den umliegenden Fahrzeugteilen sind so ausgeführt, dass die Zuleitung sich einer Vielzahl möglicher durch die Deformation von Fahrzeugteilen bedingten Bewegungen des Beschleunigungsaufnehmers und Veränderungen des Zuleitungskanals anpassen kann, ohne abzureißen oder beschädigt zu werden. Um die Mindestwirkzeit zu garantieren, sind die genannten Komponenten im Beispiel so ausgeführt, dass die Zuleitung sich an sämtliche aus einem Aufprall des Kraftfahrzeugs von geringer oder mittlerer Schwere innerhalb eines Mindestwirkzeitraums resultierenden Bewegungen des Beschleunigungsaufnehmers und Veränderungen des Zuleitungskanals anpassen kann, ohne abgerissen, übermäßig geknickt oder durchtrennt zu werden.

Unter den Voraussetzungen moderner Entwicklungs- und Fertigungsmethoden der Kraftfahrzeugindustrie können bereits im frühen Entwicklungsprozess eines Fahrzeuges Zuleitungskanäle ausgemacht oder geschaffen werden, welche die beschriebene mechanische Absicherung der Zuleitungen erlauben. Die entsprechend notwendigen Zuleitungslängen und -stärken, Zuleitungshalterungen und eventuelle Durchführungen durch Fahrzeugteile können somit bereits in einem frühen Planungsstadium vorgesehen bzw. dimensioniert und im Fertigungsprozess mit einer geringfügigen Steigerung des Fertigungsaufwands umgesetzt werden. Die Verifikation, ob eine bestimmte Ausführung der jeweiligen Fahrzeugteile die gewünschte Mindestwirkzeit garantiert oder mit hoher Wahrscheinlichkeit erwarten lässt, erfolgt wie bei der Verifikation des Deformationsraums simulativ, beispielsweise auf Basis einer FEM-Analyse.

Die durch eine erfindungsgemäße Vorrichtung erreichbare Verfügbarkeit von Ausgangssignalen der Beschleunigungsaufnehmer im gesamten Mindestwirkzeitraum gewährleistet die Möglichkeit einer genauen und zuverlässigen Beurteilung der Art und Schwere eines Aufpralls durch die Steuereinheit.

In Folge des gegenüber dem Stand der Technik an die äußeren Fahrzeugumfänge angenäherten Anbringungsorts kann zudem bereits zu einem früheren Zeitpunkt eine Beschleunigung gemessen werden, wodurch passive Sicherheitsmaßnahmen des Kraftfahrzeugs ebenfalls zu einem früheren Zeitpunkt aktiviert oder in Bereitschaft versetzt werden können.

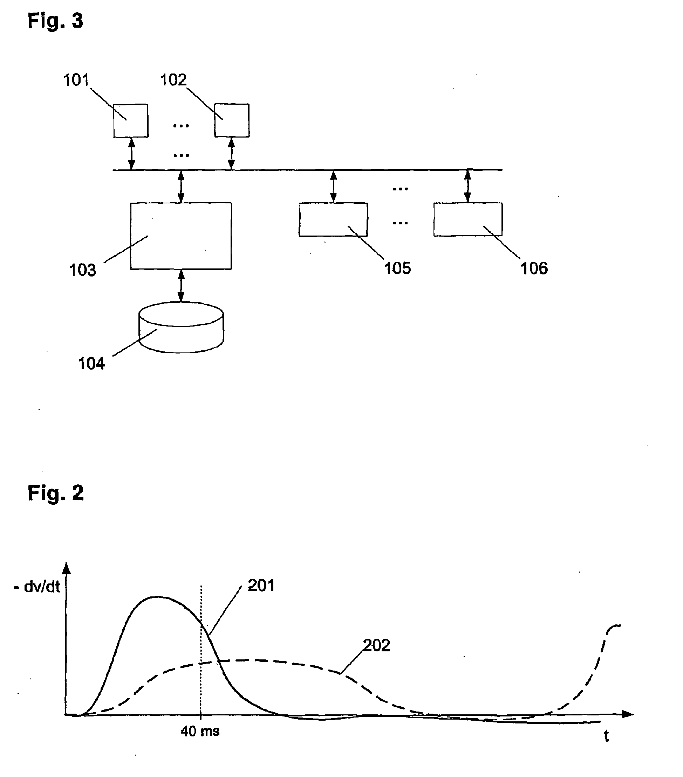

Zur Verdeutlichung der oben beschriebenen Charakteristika zeigt Fig. 2 einen Vergleich der qualitativen Zeitverläufe der Negativ-Beschleunigung, die während eines Frontaufpralls eines Kraftfahrzeugs zum Zeitpunkt t = 0 ms auf einen erfindungsgemäß (Signal 201) als Frontsensor angeordneten Beschleunigungsaufnehmer bzw. auf einen nach dem Stand der Technik (Signal 202) angeordneten Beschleunigungsaufnehmer wirkt.

Auf einen nach dem Stand der Technik (Signal 202) an einem Karosserieteil angebrachten Beschleunigungsaufnehmer wirkt im Fall eines Aufpralls zunächst eine relativ geringe negative Beschleunigung, während nachgiebige Fahrzeugteile an den äußeren Fahrzeugumfängen bereits in Folge des Aufpralls deformiert werden. In dieser Phase wird die von dem Beschleunigungsaufnehmer messbare Beschleunigung im Wesentlichen lediglich durch die auf das gesamte Fahrzeug wirkende Beschleunigung und ggf. eine leichte Deformation des Karosserieteils in folge einer mechanischen Kopplung mit weiter außen liegenden fahrzeugteilen bestimmt. Erst zu einem verhältnismäßig späten Zeitpunkt (in Fig. 2 bei t > 100 ms) nimmt die negative Beschleunigung betragsmäßig deutlich zu, falls das Karosserieteil nach einer übermäßigen Deformation der weiter außen liegenden Fahrzeugteile selbst noch stärker deformiert wird.

Bei erfindungsgemäßer Anbringung (Signal 201) ist zu einem wesentlich früheren Zeitpunkt eine starke Negativbeschleunigung messbar, da die Deformation der Fahrzeugteile an den äußeren Fahrzeugumfängen in vollem Maß in die Messung des Beschleunigungsaufnehmers eingeht.

Zur Orientierung enthält Fig. 2 zudem eine Markierung, welche das Ende des sich von t = 0 ms bis t = 40 ms erstreckenden Mindestwirkzeitraums kennzeichnet.

Die erfindungsgemäß exponierte Anbringung der Frontsensoren kann dazu führen, dass auf die Frontsensoren auch im Falle nicht sicherheitsrelevanter äußerer Einflüsse messbare Beschleunigungen wirken. Neben der mechanischen Absicherung der Beschleunigungsaufnehmer und deren Zuleitung erfordert eine erfindungsgemäße Anbringung deshalb auch eine Absicherung der gesamten Sicherheitseinrichtung gegen Fehlauslösungen. Diese Absicherung wird erfindungsgemäß informationstechnisch gelöst.

Fig. 3 zeigt schematisch die Kommunikationsstruktur einer erfindungsgemäßen passiven Insassen-Sicherheitseinrichtung für ein Kraftfahrzeug. Die verteilt im Fahrzeug angebrachten und als Frontsensoren eingesetzten Beschleunigungsaufnehmer 101,102 kommunizieren über einen Datenbus mit einer zentralen Steuereinheit 103. Die Steuereinheit 103 wertet die quasikontinuierlichen Zeitverläufe der Signale der Beschleunigungsaufnehmer 101,102 aus, vergleicht diese gegebenenfalls mit verschiedenen in einer Datenbasis 104 abgelegten Signalmustern, bestimmt Auftreten, Art und Schwere eines Aufpralls und löst entsprechende passive Sicherheitsmaßnahmen aus. Hierzu kommuniziert die Steuereinheit 103 über denselben oder einen weiteren Datenbus mit Steuergeräten 105,106 durch welche passive Sicherheitsmaßnahmen ausgelöst werden können.

## Patentansprüche

1. Vorrichtung zum Auslösen von passiven Insassen-Sicherheitsmaßnahmen in einem Kraftfahrzeug, aufweisend eine Steuereinheit, eine Vielzahl von Beschleunigungsaufnehmern zur Erfassung der durch einen Aufprall des Kraftfahrzeugs bedingten Beschleunigung an verschiedenen Orten des Kraftfahrzeugs sowie den Beschleunigungsaufnehmern zugeordnete Zuleitungen, über die Ausgangssignale der Beschleunigungsaufnehmer zu der Steuereinheit übertragen werden, welche wertekontinuierliche Ausgangssignale zumindest eines Teils der Beschleunigungsaufnehmer auswertet, aus den Ausgangssignalen die Art und/oder Schwere eines Aufpralls bestimmt und abhängig davon geeignete Sicherheitsmaßnahmen auslöst, **dadurch gekennzeichnet,**
**dass** mindestens ein Beschleunigungsaufnehmer so an einem Fahrzeugteil mit geringer Struktursteifigkeit an den äußeren Fahrzeugumfängen angebracht ist und dass alle Fahrzeugteile hinsichtlich Form, Anordnung und Material so ausgeführt sind, dass der Beschleunigungsaufnehmer nach einem Aufprall des Kraftfahrzeugs von geringer oder mittlerer Schwere innerhalb eines Mindestwirkzeitraums nicht in Berührung mit einem Fahrzeugteil mit hoher Struktursteifigkeit kommt.

2. Vorrichtung nach Anspruch 1, **dadurch gekennzeichnet,**
**dass** auf der zum Fahrzeuginneren gewandten Seite des fahrzeugteils, an welchem der Beschleunigungsaufnehmer angebracht ist, ein Deformationsraum vorgesehen ist, welcher entweder hohl ist oder ausschließlich Fahrzeugteile mit geringer Struktursteifigkeit enthält.

3. Vorrichtung nach einem der Ansprüche 1 oder 2, **dadurch gekennzeichnet,**
**dass** der Deformationsraum zum Fahrzeugäußeren hin durch eine Ebene oder eine im Wesentlichen kegelförmige Hyperebene begrenzt ist, die so gewählt ist, dass der Beschleunigungsaufnehmer sich stets, insbesondere im Falle eines Aufpralls, vollständig auf der Fahrzeuginnenseite der Ebene bzw. Hyperebene befindet.

4. Vorrichtung nach einem der Ansprüche 1 bis 3, **dadurch gekennzeichnet,**
**dass** die Zuleitung des mindestens einen Beschleunigungsaufnehmers elastisch, insbesondere biegeelastisch, ausgeführt ist, dass die Zuleitung entlang eines durch Form, Anordnung und ggf. Deformation der benachbarten Fahrzeugteile definierten Zuleitungskanals verläuft,
**dass** Form, Anordnung und Material aller Fahrzeugteile so ausgeführt sind, dass der geringste Durchmesser des Zuleitungskanals nach einem Aufprall des Kraftfahrzeugs von geringer oder mittlerer Schwere innerhalb eines Mindestwirkzeitraums größer bleibt als der Durchmesser der Zuleitung, und dass die Länge der Zuleitung, ggf. unter Berücksichtigung einer Dehnungselastizität, sowie die Anordnung und Befestigung der Zuleitung an den Fahrzeugteilen so ausgeführt sind, dass die Zuleitung sich einer Vielzahl möglicher durch die Deformation von Fahrzeugteilen bedingten Bewegungen des Beschleunigungsaufnehmers und Veränderungen des Zuleitungskanals, insbesondere sämtlichen aus einem Aufprall des Kraftfahrzeugs von geringer oder mittlerer Schwere innerhalb eines Mindestwirkzeitraums resultierenden Bewegungen des Beschleunigungsaufnehmers und Veränderungen des Zuleitungskanals, anpassen kann, ohne abzureißen oder beschädigt zu werden.

5. Vorrichtung nach einem der Ansprüche 1 bis 4, **dadurch gekennzeichnet,**
**dass** das Gehäuse des mindestens einen Beschleunigungsaufnehmers und/oder die Verbindungsstelle zwischen dem Gehäuse und der Zuleitung des Beschleunigungsaufnehmers feuchtigkeitsresistent ausgeführt ist.

6. Vorrichtung nach Anspruch 5, **dadurch gekennzeichnet,**
**dass** das Gehäuse des mindestens einen Beschleunigungsaufnehmers aus hydrolytisch stabilisiertem Material besteht
und/oder
**dass** das Gehäuse des mindestens einen Beschleunigungsaufnehmers laserverschweißt ist, insbesondere einen laserverschweißten Deckel besitzt.

7. Vorrichtung nach einem der Ansprüche 5 oder 6, **dadurch gekennzeichnet,**
**dass** am Gehäuse des mindestens einen Beschleunigungsaufnehmers Mittel für einen Druckausgleich vorgesehen sind.

8. Vorrichtung nach einem der Ansprüche 1 bis 7, **dadurch gekennzeichnet,**
**dass** der mindestens eine Beschleunigungsaufnehmer so positioniert ist, dass der Querschnitt des Beschleunigungsaufnehmers in Richtung des Fahrzeuginneren eine geringe Entfernung vom Querschnitt eines Stützelements besitzt.

9. Vorrichtung nach einem der Ansprüche 1 bis 8, **dadurch gekennzeichnet,**
**dass** der mindestens eine Beschleunigungsaufnehmer so positioniert ist, dass der Querschnitt des Beschleunigungsaufnehmers in Richtung des Fahrzeuginneren im Wesentlichen mit dem Querschnitt eines Stützelements überlappt.

10. Vorrichtung nach einem der Ansprüche 1 bis 9, **dadurch gekennzeichnet,**
**dass** die Steuereinheit geeignet ist, anhand der Ausgangssignale der Beschleunigungsaufnehmer zwischen einem Aufprall des fahrzeugs und nicht sicherheitsrelevanten Störeinflüssen zu unterscheiden.

## Claims

1. A device for triggering passive occupant safety measures in a motor vehicle, comprising a control unit, a plurality of acceleration sensors for detecting the acceleration caused by an impact of the motor vehicle at different locations of the motor vehicle as well as feed lines assigned to the acceleration sensors, by which feed lines output signals of the acceleration sensors are transmitted to the control unit, which evaluates value-continuous output signals at least of some of the acceleration sensors, determines the type and severity of the impact from the output signals and, as a function thereof, triggers appropriate safety measures, **characterised in that** at least one acceleration sensor is mounted on a vehicle part with a low structural stiffness on the outer vehicle circumferences and that all vehicle parts are designed with respect to shape, arrangement and material, in such a way that the acceleration sensor, after an impact of the motor vehicle of low or medium severity, will not come in contact with a vehicle part of a high structural rigidity within a minimum reaction time period.

2. A device according to claim 1, **characterised in that** a deformation space which is either hollow or exclusively contains vehicle parts with low structural stiffness is provided on the side of the vehicle part facing the vehicle interior, on which the acceleration sensor is mounted.

3. A device according to either of claims 1 or 2 **characterised in that** the deformation space toward the vehicle exterior, is bounded by a plane or a substantially conical hyperplane which is selected such that the acceleration sensor is always situated completely on the vehicle interior side of the plane or hyperplane more especially in the event of an impact.

4. A device according to any one of claims 1 to 3, **characterised in that** the feed line of the at least one acceleration sensor is elastic, more especially flexible, **in that** the feed line extends along a feed line duct defined by the shape, arrangement and optionally deformation of the adjacent vehicle parts, **in that** the shape, arrangement and material of all the vehicle parts are designed such that the smallest diameter of the feed line duct after an impact of the vehicle of low or medium severity, within a minimum reaction time period, remains larger than the diameter of the feed line and **in that** the length of the feed line, optionally taking into account an elasticity of extension and the arrangement and fastening of the feed line on the vehicle parts are such that the feed line is adaptable to a plurality of possible movements caused by the deformation of vehicle parts, of the acceleration sensor and changes in the feed line duct, more especially all the movements of the acceleration sensor and changes in the feed line duct resulting from an impact of the motor vehicle of low or medium severity within a minimum reaction time period, without tearing off or being damaged.

5. A device according to any one of claims 1 to 4, **characterised in that** the housing of the at least one acceleration sensor and/or the connecting point between the housing and the feed line of the acceleration sensor has a moisture-resistant construction.

6. A device according to claim 5, **characterised in that** the housing of the at least one acceleration sensor consists of hydrolytically stabilised material and/or the housing of the at least one acceleration sensor is laser-welded, more especially has a laser-welded lid.

7. A device according to either of claims 5 or 6, **characterised in that** means for pressure compensation are provided on the housing of the at least one acceleration sensor.

8. A device according to any one of claims 1 to 7, **characterised in that** the at least one acceleration sensor is positioned in such a way that the cross-section of the acceleration sensor is a small distance from the cross-section of a support element in the direction of the vehicle interior.

9. A device according to any one of claims 1 to 8, **characterised in that** the at least one acceleration sensor is positioned in such a way that the cross-section of the acceleration sensor substantially overlaps with the cross-section of a support element in the direction of the vehicle interior.

10. A device according to any one of claims 1 to 9, **characterised in that** the control unit is suitable, using the output signals of the acceleration sensors, to distinguish between an impact of the vehicle and disturbing influences not relevant to safety.

## Revendications

1. Dispositif pour déclencher des mesures de protection passive pour les occupants d'un véhicule automobile comprenant une unité de commande, un ensemble de capteurs pour détecter l'accélération occasionnée par la collision en différents emplacements du véhicule ainsi que des lignes de transmission associées aux capteurs d'accélération, pour transmettre leurs signaux de sortie à l'unité de commande, celle-ci exploitant les signaux de sortie d'au moins une partie des capteurs d'accélération pour en déterminer la nature et/ou la gravité d'une collision et de déclencher les mesures de sécurité appropriées qui correspondent,
**caractérisé en ce qu'**
au moins un capteur d'accélération est installé sur une partie du véhicule de faible rigidité structurelle, à la périphérie extérieure du véhicule, et
toutes les parties du véhicule ont une forme, une disposition et une matière telles que le capteur d'accélération après une collision de faible ou moyenne gravité à l'intérieur d'une période d'action minimale, n'arrive pas en contact avec une partie du véhicule ayant une plus grande rigidité structurelle.

2. Dispositif selon la revendication 1,
**caractérisé en ce que**
dans le côté de la partie interne du véhicule qui est équipé des capteurs d'accélération, il est prévu un volume de déformation soit creux, soit contenant exclusivement des éléments du véhicule d'une faible rigidité structurable.

3. Dispositif selon l'une des revendications 1 ou 2,
**caractérisé en ce que**
le volume de déformation est délimité vers l'extérieur du véhicule par un plan ou par un hyperplan pratiquement de forme conique choisi pour que le capteur d'accélération se trouve toujours complètement sur la face du plan ou de l'hyperplan, côté intérieur du véhicule en particulier en cas de collision.

4. Dispositif selon l'une des revendications 1 à 3,
**caractérisé en ce que**
la ligne de transmission de signaux d'au moins un capteur d'accélération est élastique et en particulier en flexion,
la ligne d'alimentation est installée le long d'un canal d'alimentation, défini par la forme, la disposition et le cas échéant la déformation des parties voisines du véhicule,
la forme, le montage et la matière de toutes les parties du véhicule sont réalisées pour que le plus petit diamètre du canal d'alimentation après une collision de faible ou moyenne gravité, à l'intérieur d'un espace de temps minimum, reste plus grand que le diamètre de la ligne d'alimentation, et
la longueur de la ligne d'alimentation, le cas échéant en tenant compte de son élasticité en dilation, ainsi que le montage et la fixation de la ligne d'alimentation sur les parties du véhicule sont réalisées pour que la ligne d'alimentation puisse s'adapter à un grand nombre de mouvements du capteur d'accélération engendrés par la déformation des parties du véhicule ainsi que des variations du canal d'alimentation notamment de tous les mouvements du capteur d'accélération produite dans l'espace de temps minimum en cas de collision de faible ou moyenne gravité sans risque d'arrachement ou d'endommagement.

5. Dispositif selon l'une des revendications 1 à 4
**caractérisé en ce que**
le boîtier d'au moins un capteur d'accélération et/ou le point de liaison entre le boîtier et la ligne d'alimentation du capteur d'accélération résiste à l'humidité.

6. Dispositif selon la revendication 5,
**caractérisé en ce que**
le boîtier d'au moins un capteur d'accélération est en une matière stabilisée du point de vue hydrolytique et/ ou,
le boîtier d'au moins un capteur d'accélération est soudé par laser notamment avec un couvercle soudé par laser.

7. Dispositif selon l'une des revendications 5 ou 6,
**caractérisé en ce que**
le boîtier d'au moins un capteur d'accélération comporte des moyens pour compenser une pression.

8. Dispositif selon l'une des revendications 1 à 7,
**caractérisé par**
au moins un capteur d'accélération positionné pour que la section du capteur d'accélération tournée vers l'intérieur du véhicule soit faiblement différente de la section d'un élément d'appui.

9. Dispositif selon l'une des revendications 1 à 8,
**caractérisé par**
au moins un capteur d'accélération positionné pour que la section du capteur d'accélération en direction de l'intérieur du véhicule chevauche pratiquement la section d'un élément d'appui.

10. Dispositif selon l'une des revendications 1 à 9,
**caractérisé en ce que**
l'unité de commande est réalisée pour qu'à l'aide des signaux de sortie du capteur d'accélération, on puisse distinguer au moins entre une collision et des influences perturbatrices ne concernant pas la sécurité.
